# EUROPEAN PATENT SPECIFICATION

(11) **EP 2 176 157 B1**
(45) Date of publication and mention of the grant of the patent: **12.03.2014**
(21) Application number: 08787730.4
(22) Date of filing: 13.08.2008
(51) Int. Cl.: B66C 13/12, H02G 3/04, B66C 19/00

(54) **ARRANGEMENT FOR INSTALLING CABLES ON OUTER SURFACES OF CRANE STRUCTURES**
ANORDNUNG ZUR INSTALLATION VON KABELN AUF ÄUSSEREN OBERFLÄCHEN VON KRANSTRUKTUREN
DISPOSITIF POUR INSTALLER DES CÂBLES SUR DES SURFACES EXTÉRIEURES DE STRUCTURES DE GRUE

(30) Priority: 15.08.2007 FI 20075570
(43) Date of publication of application: 21.04.2010
(73) Proprietor: Konecranes Plc, 05830 Hyvinkää (FI)
(72) Inventor: HOLOPAINEN, Arto, FI-05800 Hyvinkää (FI); NOWAK, Mirko, 06844 Dessau (DE); SALMINEN, Petri, FI-37830 Viiala (FI)
(74) Representative: Kolster Oy Ab
(86) International application number: PCT/FI2008/050457
(87) International publication number: WO 2009/022057

(56) References cited:
- EP-A2- 0 723 102
- EP-A2- 0 723 102
- WO-A1-82/00843
- DE-A1- 3 422 955
- DE-A1- 3 422 955
- DE-U1- 8 422 477
- DE-U1- 8 422 477
- JP-A- 60 188 295
- JP-U- H0 514 250
- US-A- 2 764 626
- US-B1- 6 483 025

## Description

### BACKGROUND OF THE INVENTION

The invention relates to an arrangement for installing cables on outer surfaces of crane structures, the arrangement comprising means for routing and fastening cables to said surfaces.

The crane in question is a gantry-type of crane on rubber tyres, i.e. an RTG crane, which is used particularly in harbours and in which cables between the bogie structures and upper part of the crane in particular have hitherto been fastened to the crane's footing structures with ladder structures especially formed for the cables.

Cable ladders are usually made of stainless acid-resistant or galvanized steel, and regardless of the material, the fastening has required a lot of different parts, which has made the arrangement very expensive and thus slow to install. Covers made of stainless or acid-resistant steel are often mounted on the cable ladders to protect the cables from impacts and sunlight.

When cable ladders are used, it is obvious that the binding of the cables and the installation of feasible protective covers take a lot of time.

The document JP 60 188295 A discloses an arrangement for installing cables on outer surfaces of crane structures, the arrangement comprising means for movably routing and fastening cables to said surfaces. The document EP 0 723 102 A2 discloses a cable tray support system to be used in buildings, factories and other commercial structures; said system including a pair of longitudinally extending transversely spaced rails. The document DE 84 22 477 U1 discloses a rail to be fixed to a wall for supporting cables; said rail has a C profile. The document DE 34 22 955 A1 discloses a metal rail to be fixed to a wall for holding cable supports, said rail having a kind of U profile. The document US 2,764,626 A discloses cruciform elements used to hold electric wires or the like on walls of an aircraft fuselage.

### SUMMARY OF THE INVENTION

It is an object of the invention to remove the above-mentioned drawbacks. This object is achieved by an arrangement according to the invention, characterized in that the means for routing and fastening cables mainly consist of T profiles fastened at the stem part of the T profile to the outer surface of the crane structure, the upper part of the T profile on top of and transverse to the stem part of the T profile being at a distance from the surface of the crane and substantially parallel to this surface, whereby the T profile together with the surface of the crane provide cable conduits for the cables, which are open from the sides.

Thus, the invention is simply based on replacing former ladder structures with T profiles.

The arrangement of the invention provides the advantage that considerable cost savings may be achieved with respect to both the structure itself and the installation of the arrangement and the cables.

In addition, no additional protective plates are needed, because the transverse parts of the T profiles parallel to the mounting surfaces, also provide a protection against impacts and sunlight.

Claims 2 to 7 describe preferred embodiments of the invention.

### LIST OF FIGURES

The invention will now be described in greater detail by means of an exemplary preferred embodiment in connection with an RTG crane, with reference to the attached drawings, in which
Figure 1 is a simplified schematic view of an RTG crane, in connection with which the present invention is applied;
Figure 2 shows in more detail a cable conduit formed of T profiles on a foot of the crane of Figure 1, and cables sketched therein; and
Figure 3 is a cross section of Figure 2 without cables.

### DETAILED DESCRIPTION OF THE INVENTION

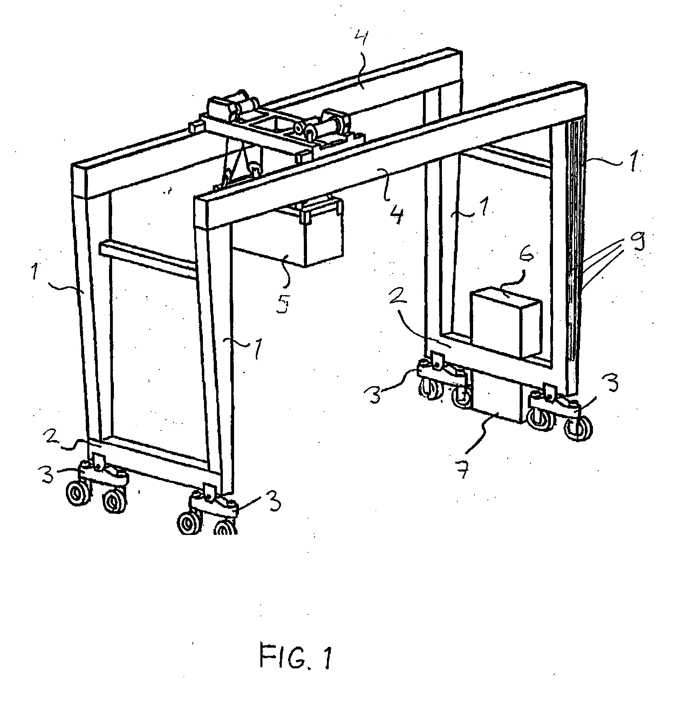

With reference to Figure 1, it shows a simplification of a gantry-type of crane on rubber tyres, i.e. an RTG crane, which is used particularly in harbours and to which the present invention is particularly well suited. The crane has four feet 1, bogie structures 3 connected, together with lower beam structures 2 joining two feet 1, to the lower parts of the feet 1, upper beam structures 4 connected to the upper parts of the feet 1 and extending transversally to the lower beam structures 2, a trolley 5 movable along the upper beam structures 4, and a switchboard 6 driven by motors 7. Cables 8 necessary for power supply extend, for example, along the feet 1 between the bogie structures 3 and the upper beam structures 4, and routing and fastening manners of the cables are now discussed in more detail.

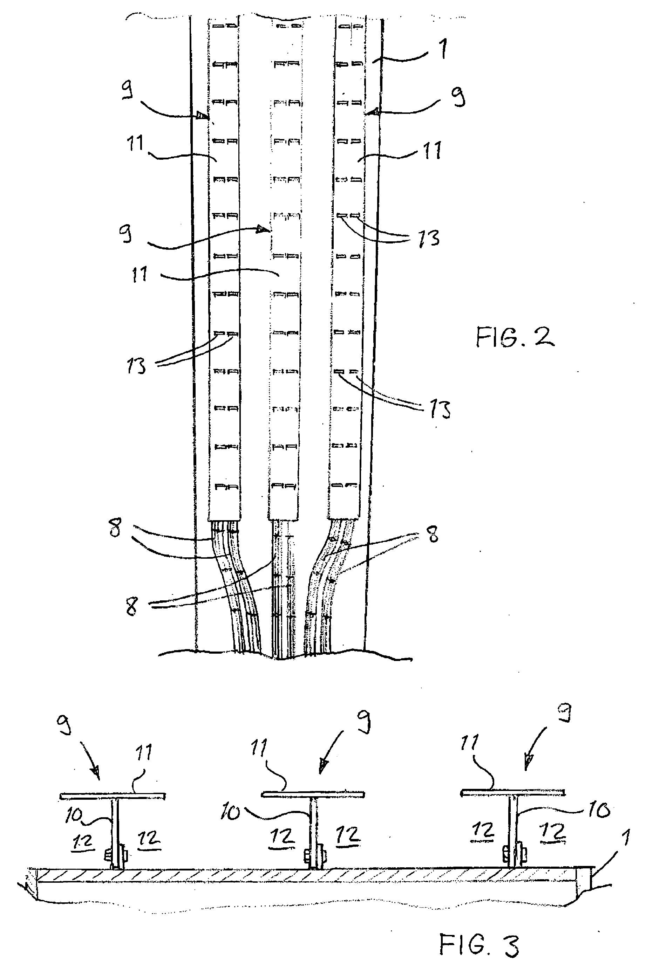

As particularly shown in Figures 2 and 3, the means for routing and fastening cables 8 include T profiles 9, which are fastened at a stem part 10 of the T profile to the outer surface of the crane structure, in this example to the outer surface of the crane foot 1, the upper part or the transverse part 11 of the T profile on top of and transverse to the stem part 10 of the T profile being at a distance from the surface of the crane and substantially parallel to this surface, whereby the T profile 9 together with the surface of the crane provide cable conduits 12 for the cables 8, which are open from the sides.

It is also possible to mount T profiles on the bottom of the trolley 5 movable along the upper beam structures 4 and/or on the sides of the bogie structures 3, because they also include cabling. This is, however, not shown in the drawings, because the realization principle may be similar to that applied in the crane feet 1.

T profiles may be made of painted structural steel, since no special steel grades are necessarily required.

For binding the cables 8 and the binding means thereof, the transverse upper parts of the T profiles are provided with perforations or slots 13.

The T profiles 9 are fastened to the crane most preferably by screws. Much fewer screws are needed than in the former manner of fastening cable ladders.

The above description of the invention is only intended to illustrate the invention. A person skilled in the art may, however, apply it to many different uses and implement its details suitably within the scope of the attached claims.

## Claims

1. An arrangement for installing cables (8) on outer surfaces of crane structures (1; 3; 5), the arrangement comprising means (9) for routing and fastening cables to said surfaces, **characterized in that** the means for routing and fastening cables (8) mainly consist of T profiles (9) fastened at the stem part (10) of the T profile to the outer surface (1; 3; 5) of the crane structure, the upper part (11) of the T profile on top of and transverse to the stem part of the T profile being at a distance from the surface of the crane and substantially parallel to this surface, whereby the T profile together with the surface of the crane provide cable conduits (12) for the cables, which are open from the sides.

2. An arrangement as claimed in claim 1, **characterized in that** the T profiles (9) are mounted vertically on the foot structures of an RTG crane, where the cables (8) extend between bogie structures (3) arranged at the lower parts of the crane feet (1) and upper beam structures (4) connected to the crane feet at the top.

3. An arrangement as claimed in claim 1 or 2, **characterized in that** the T profiles (9) are mounted on the bottom of a trolley (5) moving along the upper beam structures (4) connected to the feet (1) of the RTG crane at the top.

4. An arrangement as claimed in claim 1, 2 or 3, **characterized in that** the T profiles (9) are mounted on the side of the bogie structures (3) arranged at the lower parts of the crane feet (1).

5. An arrangement as claimed in any one of the preceding claims, **characterized in that** the T profiles (9) are made of painted structural steel.

6. An arrangement as claimed in any one of the preceding claims, **characterized in that** the transverse upper parts (11) of the T profiles (9) are provided with perforations or slots (13) for binding means of the cables (8).

7. An arrangement as claimed in any one of the preceding claims, **characterized in that** the T profiles (9) are fastened to the crane by screws.

## Patentansprüche

1. Anordnung zur Installation von Kabeln (8) auf äußeren Oberflächen von Kranstrukturen (1; 3; 5), welche Anordnung Mittel (9) zur Leitung und Befestigung von Kabeln an den Oberflächen aufweist, **dadurch gekennzeichnet, dass** die Mittel zur Leitung und Befestigung von Kabeln (8) hauptsächlich aus T-Profilen (9) bestehen, wobei der Stegteil (10) des T-Profils an der äußeren Oberfläche (1; 3; 5) der Kranstruktur befestigt ist und sich der obere Teil (11) des T-Profils, der auf dem Stegteil des T-Profils und quer dazu verläuft, in einem Abstand von der Oberfläche des Krans und wesentlich parallel zu dieser Oberfläche befindet, wobei das T-Profil zusammen mit der Oberfläche des Krans Kabelkanäle (12) für die Kabel bereitstellen, die von den Seiten offen sind.

2. Anordnung nach Patentanspruch 1, **dadurch gekennzeichnet, dass** die T-Profile (9) vertikal an den Fußstrukturen eines RTG-Krans montiert sind, wo sich die Kabel (8) zwischen an den unteren Teilen der Kranfüße (1) angeordneten Drehgestellstrukturen (3) und mit den Kranfüßen oben verbundenen oberen Trägerstrukturen (3) erstrecken.

3. Anordnung nach Patentanspruch 1 oder 2, **dadurch gekennzeichnet, dass** die T-Profile (9) am Boden einer Laufkatze (5) montiert sind, die sich entlang den oberen Trägerstrukturen (4) bewegt, die oben mit den Füßen (1) des RTG-Krans verbunden sind.

4. Anordnung nach Patentanspruch 1, 2 oder 3, dadurch **ge**- **kennzeichnet**, dass die T-Profile (9) auf der Seite der Drehgestellstrukturen (3) montiert sind, die an den unteren Teilen der Kranfüße (1) angeordnet sind.

5. Anordnung nach einem der vorhergehenden Patentansprüche, **dadurch gekennzeichnet, dass** die T-Profile (9) aus bemaltem Baustahl bestehen.

6. Anordnung nach einem der vorhergehenden Patentansprüche, **dadurch gekennzeichnet, dass** die queren oberen Teile (11) der T-Profile (9) mit Perforationen oder Schlitzen (13) für Bindungsmittel der Kabel (8) versehen sind.

7. Anordnung nach einem der vorhergehenden Patentansprüche, **dadurch gekennzeichnet, dass** die T-Profile (9) am Kran anhand von Schrauben befestigt sind.

## Revendications

1. Agencement permettant d'installer des câbles (8) sur des surfaces externes de structures de portique (1 ; 3 ; 5), l'agencement comprenant des moyens (9) permettant d'acheminer et de fixer des câbles auxdites surfaces, **caractérisé en ce que** les moyens permettant d'acheminer et fixer les câbles (8) consistent principalement en des profilés en T (9) fixés au niveau de la partie de tige (10) du profilé en T à la surface externe (1 ; 3 ; 5) de la structure de portique, la partie supérieure (11) du profilé en T sur le dessus de et transversale à la partie de tige du profilé en T étant à une distance de la surface du portique et sensiblement parallèle à cette surface, moyennant quoi le profilé en T conjointement à la surface du portique fournit des conduits de câble (12) pour les câbles, qui sont ouverts depuis les côtés.

2. Agencement selon la revendication 1, **caractérisé en ce que** les profilés en T (9) sont montés verticalement sur les structures de pied d'un portique monté sur pneu, où les câbles (8) s'étendent entre des structures de bogie (3) agencées au niveau des parties inférieures des pieds de portique (1) et des structures de poutre supérieures (4) reliées aux pieds du portique au niveau du dessus.

3. Agencement selon la revendication 1 ou 2, **caractérisé en ce que** les profilés en T (9) sont montés sur le dessous d'un chariot (5) se déplaçant le long des structures de poutre supérieures (4) reliées aux pieds (1) du portique monté sur pneu au niveau du dessus.

4. Agencement selon la revendication 1, 2 ou 3, **caractérisé en ce que** les profilés en T (9) sont montés sur le côté des structures de bogie (3) agencées au niveau des parties inférieures des pieds de portique (1).

5. Agencement selon l'une quelconque des revendications précédentes, **caractérisé en ce que** les profilés en T (9) sont constitués d'acier de construction peint.

6. Agencement selon l'une quelconque des revendications précédentes, **caractérisé en ce que** les parties supérieures transversales (11) des profilés en T (9) sont dotées de perforations ou de fentes (13) pour des moyens de liaison des câbles (8).

7. Agencement selon l'une quelconque des revendications précédentes, **caractérisé en ce que** les profilés en T (9) sont fixés au portique par des vis.
